# EUROPEAN PATENT APPLICATION

(11) **EP 2 048 853 A1**
(43) Date of publication of application: **15.04.2009**
(21) Application number: 07118328.9
(22) Date of filing: 11.10.2007
(51) Int. Cl.: H04L 29/08

(54) **System and user terminal for storing, managing and displaying image, audio or video files**

(71) Applicant: Nextlead GmbH, 81369 München (DE)
(72) Inventor: Hsiung, Chen Kuo, Zhongshan Road, Guangzhou (CN); Kupfer, Alexander, 68259 Mannheim (DE)
(74) Representative: Zech, Stefan Markus

(57) **Abstract**

System for storing, managing and displaying image, audio or video files, comprising at least one content memory, which is shared by a plurality of users and which comprises user-dedicated memory areas for storing their image, audio or video files; a plurality of user terminals comprising file input, directory, file display and internal file storing functions, content memory access functions and a data network port; and a middleware server connected in a data network between the user terminals and the content memory, for supporting the management of the image, audio or video files and for controlling a bidirectional transmission of the files between the user terminals and the content memory, wherein the user terminals comprise a proprietary user interface which is basically reduced to the above functions and the middleware server provides standard user interface functions, including access control functions to the content memory.

## Description

The invention relates to a system for storing, managing and displaying image, audio or video files, as well as to a user terminal of such system.

Nowadays, millions of computer owners and photographers use their personal computer for storing and processing digital photos, for sending photos to relatives and friends and for ordering photo prints. Meanwhile, internet based content management systems have been established which, among other services, provide an access to data bases for centrally storing large amounts of private photos or other private image, audio or video files and for handling such contents in a sophisticated manner, including highly developed search and file exchange facilities. However, to make use of such systems, a private photographer or video producer needs a computer and certain computer knowledge and has to carry out a comparatively large number of operations to access the respective system and to manage his files in the framework thereof.

On the other hand, in the last few years simple digital photo frames have come into the market, which allow for displaying digital photos and which, for this purpose, are equipped with memory card readers or with ports for transmitting the corresponding image files into an internal display memory. Such devices are, however, not adapted to be connected to a data network and to transmit the respective files to a centralized content management system or to receive files from such system or from other user terminals.

Therefore, it is an object of the present invention to provide a highly user-friendly system for storing, managing and displaying private image, audio or video files and, in particular, a comparatively simple and easy to operate user terminal which offers a broad range of attractive services for private producers of such files.

This object is, in its system aspect, solved by a system according to claim 1 and, in its user terminal aspect, by a user terminal of claim 12. Advantageous embodiments of the present invention are subject of the respective dependent claims.

The invention comprises the idea to configure the requested system from comparatively simple and in expensive user terminals at one hand, a content management system comprising a data base for storing the users' files at the other end and from a middleware server for providing a network-based connection between the user terminals and the content management system. The middleware server is adapted to provide a considerable part of those processing functions which are typically carried out in a user's data terminal of the personal computer type and from which functions the user terminals of the inventive system shall be kept free, to ensure the required simplicity of their construction and operation.

Insofar, the proposed system basically comprises:
- at least one content memory, which is shared by a plurality of users and which comprises user-dedicated memory areas for storing their image, audio or video files;
- a plurality of user terminals comprising file input, directory, file display and internal file storing functions, content memory access functions and a data network port; and
- a middleware server connected in a data network between the user terminals and the content memory, for supporting the management of the image, audio or video files and for controlling a bidirectional transmission of the files between the user terminals and the content memory,
wherein the user terminals comprise a proprietary user interface which is basically reduced to the above functions and the middleware server provides standard user interface functions, including access control functions to the content memory.

In an embodiment of the invention, the user terminals each comprise a data network interface which provides for a data network connection via the middleware server, as well as in parallel to the middleware server, the latter (direct) connection providing restricted functions.

In a further embodiment of the invention, in the middleware server user-dedicated safety functions are implemented, in particular for controlling the access to the content memory and for online banking procedures, which functions make use of user-dedicated data sets regarding biometric features and/or shared secrets of the user, which data sets are stored in a user data memory of the middleware server, or which make use of a public key infrastructure.

A system according to a further embodiment of the invention comprises a dedicated internet website serving as file management interface, wherein the middleware server provides for user interface functions for accessing the website using the user terminals.

In a further embodiment, the middleware server comprises a network address memory having user-dedicated memory areas for storing data and telecommunication network addresses each associated to a short code which is stored in a user terminal of a respective user, the memory areas being adapted to be addressed by receiving a respective short code from the respective user terminal, to send an image, audio or video file from the user terminal to the respective data or telecommunication network address. Furthermore, in this embodiment advantageously a comment memory is connected to the middleware server, the comment memory serving for storing a respective comment associated to at least part of the data or to the communication network addresses, for sending such comment, connected to an image, audio or video file, to a respective network address when the network address memory is addressed with a respective short code which is associated to the respective data or telecommunication network address.

Further, preferably a request memory is connected to the middleware server, the request memory serving for storing a request or forwarding routine associated to at least part of the data or telecommunication network addresses, for searching for data under a respective network address upon receipt of a respective short code from the user terminal and for forwarding a search result to the user terminal. More preferably, at least one of the comment memory or the request memory comprises user-dedicated memory areas which are associated to the memory areas of the network address memory, the user-dedicated network addresses together with the associated comments and/or requests forming a user-specific network communication profile.

For providing a data connection between the user terminals and the middleware server, in a further embodiment, a safe data channel is established, for implementing the safe data channel in particular a public key infrastructure being used.

In a further embodiment of the inventive system, in the middleware server, besides proprietary interfaces and adapters for system-internal connections, standard interfaces and adapters for system-external connections and functions are provided. In a further embodiment a device API and a provider API for adapting and transmitting externally provided contents and/or services to the users via the middleware server and the user terminals are provided.

In accordance with the above mentioned basic concept, an inventive user terminal is configured as a hand-held or tablet device, comprising a display screen or an external display interface, a control/operating area, at least one of a built-in and exchangeable internal memory for image, audio or video files, a data file interface for receiving image, audio or video files from a source device, and a data network interface, in particular Ethernet, WLAN or mobile network interface, for connecting the terminal to a data network.

In a preferred embodiment of the user terminal a memory control unit is associated to the built-in or exchangeable internal memory, for controlling the usage thereof in dependence on a memory usage ratio and/or in dependence on control signals being received from the middleware server. Preferably, the memory control unit is adapted for affecting an internal storage of received image or video files with an optical resolution which is adapted to the resolution of the display screen. In a further embodiment, the memory control unit is adapted for effecting a storage of received image or video files with an optical resolution below the resolution of the display screen, when a detected memory usage ratio exceeds a predetermined threshold value, and wherein for this purpose usage ratio detection means and image resolution control means being connected into the transmission path from the data interface to the internal memory are provided.

Furthermore, preferably the user terminal does not comprise an alphanumeric keyboard but means for displaying a user menu on the display screen and operating means for inputting menu-driven commands.

In a further embodiment of the invention, the user terminal comprises a file input detection unit connected to the data file interface, for detecting an input of image, audio or video files, and a transmission control unit for automatically forwarding received image, audio or video files via the data network port to the content memory in response to the detection of a file input. In this embodiment, preferably the transmission control unit comprises an image resolution control unit being connected, at its input side, with an operating element of the user terminal, for adjusting the image resolution of an image or video file to be sent to the content memory.

Further, preferably the data file interface for receiving the image, audio or video files comprises a USB connector or a memory card reader.

According to a further embodiment of the invention, for selected functions of handling the image, audio or video files, in particular for transmitting the same to the content memory, for transmitting the same to predetermined addresses of a data or telecommunication network, for displaying the same on the display screen or for ordering photo prints, in the user terminal dedicated operating means for one-click- or one-touch triggering or triggering those functions on a first or second menu level, without alphanumeric inputs, are provided. Furthermore, most preferably the user terminal comprises operating means for selecting network-provided information in connection with a user menu, but without necessarily enquiring alphanumeric inputs. Most preferably, even the operating means referenced here work on a one-click or one-touch basis. It should be noted that the terms "one-click" or "one-touch" should be interpreted in a broader meaning, to a different shade the intentionally simple operating functions of the proposed user terminal from those of a personal computer to trigger comparable storing, transmitting or managing functions.

In a further embodiment of the invention, in the user terminal a short code memory for storing a selection of predetermined short codes is associated to the user menu such that in the framework of the user menu the short codes are displayed, in particular to be confirmed on a one-click or one-touch basis.

Furthermore, most preferably the user terminal comprises a housing of the digital photo frame type, in particular having a foldable and adjustable support element.

Further embodiments of the invention are described below, in connection with the drawings, in which
- Fig. 1: shows an overall system configuration of an embodiment of the invention,
- Fig. 2: shows an embodiment of the middleware server architecture,
- Fig. 3: shows important components of an embodiment of the middleware server,
- Fig. 4A and 4B: shows a perspective view and a functional block diagram of an embodiment of the user terminal,
- Fig. 5: shows a model of an embodiment of the system in print services,
- Fig. 6: shows a model of an embodiment of the invention used for an RSS-feeder (API wrap)
- Fig. 7: shows a model of the system according to Fig. 6 for negotiation and
- Fig. 8: shows a model of an embodiment of the system, used for image sharing.

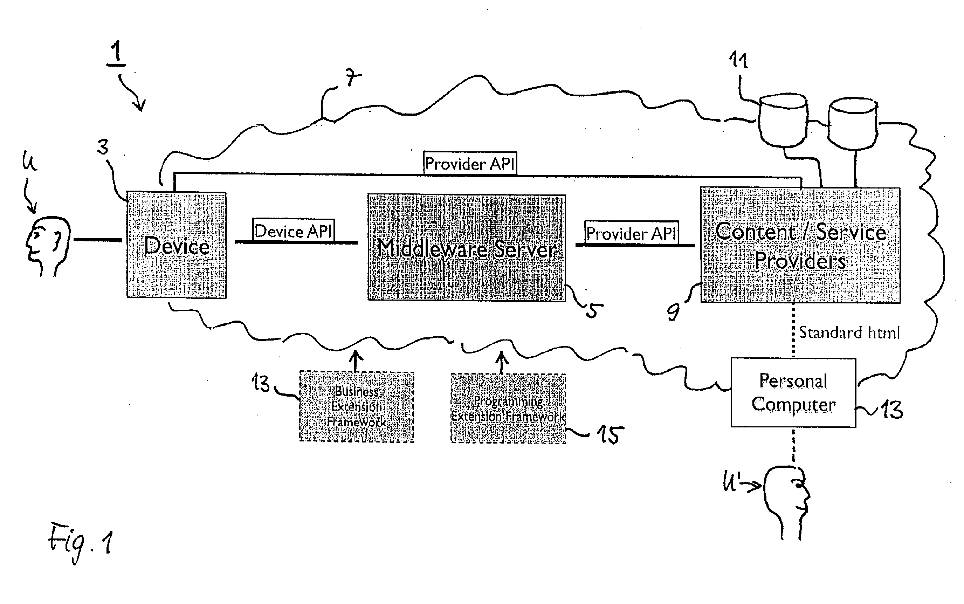

Fig. 1 shows schematically, as a functional block diagram, the structure of a system 1 according to the invention. A user terminal 3 of a user U is, via a middleware server 5, in a data network 7 connected to the facilities of a content/service provider 9, including several data bases 11 for private photos (image files), audio files or video files etc. Besides the user terminals 3, personal computers 13 of other users U' may be connected to the facilities (website) of the content/servers provider via a standard HTML-connection.

In the framework of the system 1, content is provided by existing or newly established providers which are mainly adapted to serve the users via standard web browsing interfaces. The middleware server 5 arranges for a communication between the specific, easy to operate user terminals 3 and the content provider(s) 9 by wrapping their API or providing gateway informations for direct access. The middleware server functions are basically independent from specific content providers and, therefore, provide added value. In particular, the middleware server is adapted to provide for a personalisation in the access to the content/servers providers' facilities and services and makes the user experience very user-centric. The system 1 is preferably designed to enable easy extension for new business models and access to new types of communication with other users and service/content providers, and this extension process is offered through a business extension framework 13 and programming extension framework 15.

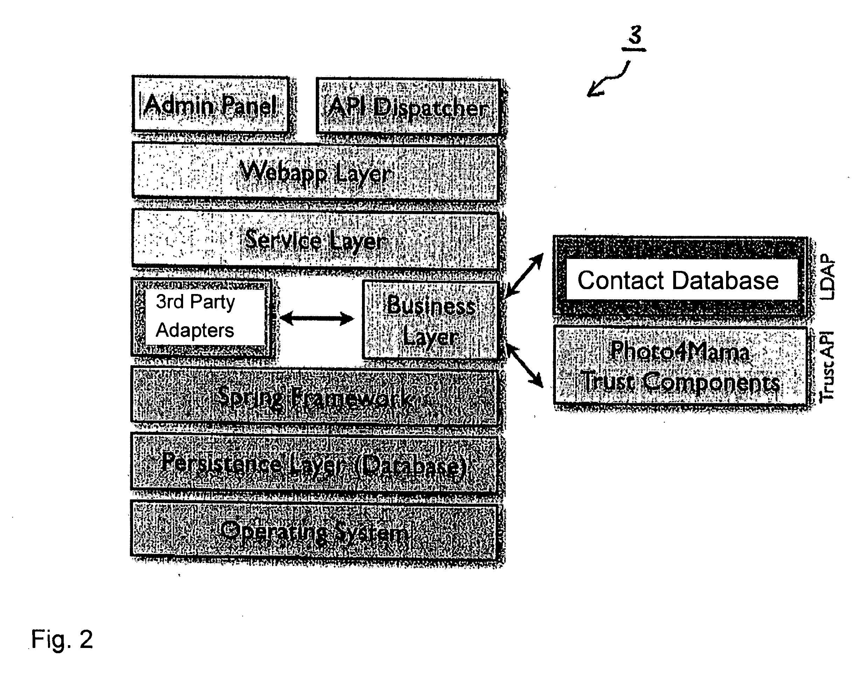

Fig. 2 shows a typical middleware server architecture of the middleware server 3. As this figure is basically self-explaining to one of ordinary skill in the art, no detailed explanation will be given here.

Notably, the admin panel is an extensible administrative controlling instrument to set different configuration variables in the system. API dispatcher provides for an external point for API calls and input validation. The web application layer maps web requests to the appropriate services in the service layer and provides for data-request translation. The services layer provides function blocks with well-defined interfaces to control and handle various tasks in the system.

The business layer provides for business classes/objects and wires them correctly. This layer also contains factories for various condition based object constructs. The 3^{rd} party adapters are various connectors and objects for 3^{rd} party functionalities or connections, respectively. The contact data base is a standard set of APIs to store low-level contact information in a directory structure. The "Photo4Mama" trust components provide for an easy trusted access to a photo data base, acting as a memory for image files and providing certain services in this regard. The spring framework is a highly adaptable framework for various software components in the server.

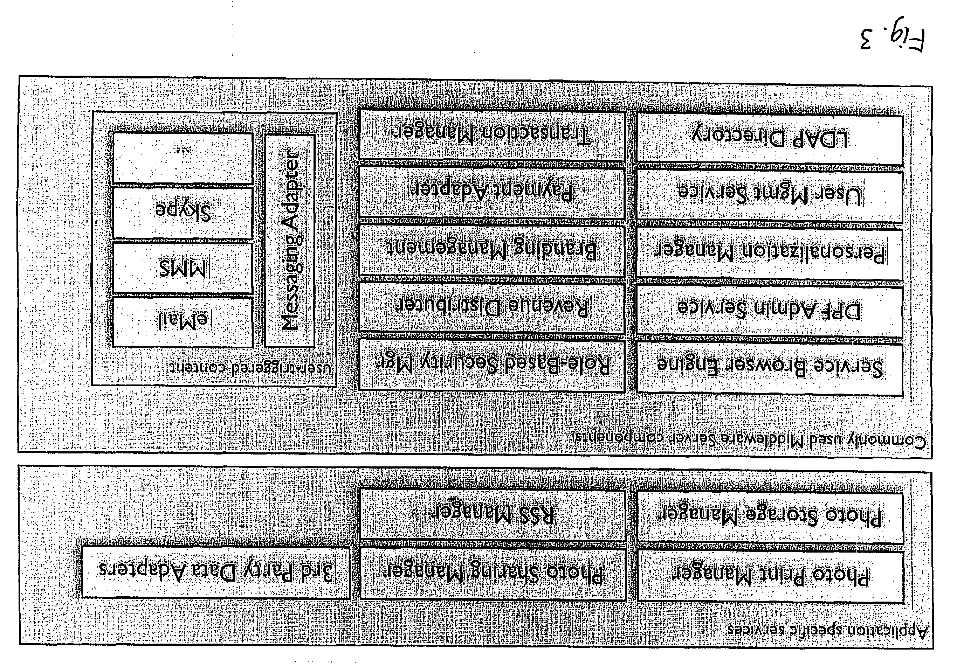

Fig. 3 shows basic components of the middleware server 3 in the system of Fig. 1 and is likewise self-explaining. Nevertheless, the following should be noted, in addition to the remarks regarding Fig. 2:
The photo sharing manager provides interfaces to send images between users and runs lower layer functions to store images in incoming folders. The photo print manager offers printing and print utility methods. It provides an abstract interface to various print providers, and it can make provider decisions based on various criteria, like paper price or mailing expenses. The photo storage manager provides various functions regarding the storage of user photos and their retrieval. Among others, it provides for a sophisticated handling of the photos to avoid storing duplicates, and it provides for a load balancing for different storage areas of a user file data base.

The RSS-manager contains a list of public LSS-feed to fetch and download. It runs personalisation functions (directly or indirectly by aspect) to filter/customize the feed. In this regard, the personalisation manager handles several functions around the user's person, provides for a user-interface and data personalisation and crosscuts many aspects in the system where personalisation should take place. Examples for the personalisation under discussion are: language adaptation, based on user settings, adaptations of the web interface, or changes for example to feed configurations based on user locations.

The payment adapter is a framework which functions to allow for billing and payment actions. The payment adapter is configured to connect the contact data (by using LDAP) with associated billing interfaces provided by the specific accessed services. The user management service provides an access to lower the layer user storage engines. It allows to handle user names with their associated passwords and provides interfaces to manage them. Further functions of the user management service include user registration, account management and role configuration.

The transaction manager stores API transactions and keeps off state of them. It runs transactions on appropriate time and stores the results. The design of the transaction manager allows for a distribution of a respective transaction to other middleware servers on the network and provides the basis for load balancing and scalable execution of the procedures. The LDAP directory provides for a unified access to all data around contacts. It is a central storage and extension point for new user-related content.

The messaging adapter is adapted to read and respond to different interactive content sources, like email/MMS or even Skype in a more abstract manner. Furthermore, it provides interfaces to easily collect/read data and import them into the system. The adapter uses the photo-storage manager to correctly associate media sources with users. The role-based security manager provides for a secure component access, by authorizing users in the system. Furthermore, it provides interfaces available for components to define their respective security aspects.

The service browser engine provides methods to define an interaction-driven user interface based on a meta-language. This user interface is then mainly used for the user terminal (device). It facilitates an extension by having a service browser library which can be extended by 3^{rd} party developers. The revenue distributor provides standard interfaces to set up new revenue distribution configurations, and it is adapted to secure them with certain limits. The DPF admin server stores DPF-user associations and provides standard interfaces to configure them. In this regard, connections between users and frames are handled in an abstract manner. The branding management sets the brands values and properties at different places. It is able to handle multiple brands per MWS. Branding has also aspects like UI and data branding.

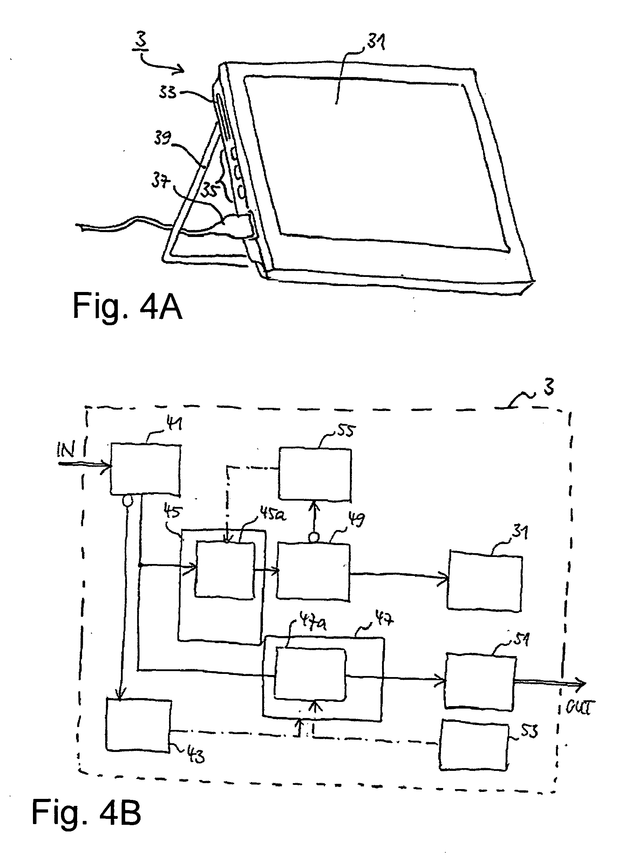

Fig. 4A and 4B show the outer appearance and, as a functional block diagram, important functional components of the user terminal 3.

Fig. 4A shows the user terminal 3 designed as a slightly modified digital photo frame with a large display screen 31, a memory card reader slot 33, an operation area 35 below the screen 31, a network connector 37 and a foldable and adjustable support (stand) 39. On the display screen 31, a user menu may be displayed, and corresponding inputs may be made operating selected keys of the operation area of operating elements, respectively. Most preferably, a user menu displayed on the screen 31 is designed such that for triggering the most frequently used functions a minimum number of operating steps by actuating one of the keys provided below the screen is required, so as to provide basically a one-click or one-touch operation.

Fig. 4B illustrates functional components which are associated to the input of files on the one hand and their output via a network connection and/or the display thereof on the other. For this purpose, a data file interface 41 is monitored by means of a file input detection unit 43 to detect an input of image, audio or video files (e. g. on a memory card inserted into the card reader slot 33, shown in Fig. 4A). At its output side, the data file interface 41 is connected both to a memory control unit 45 and to a transmission control unit 47 for controlling the internal storage in an internal file memory 49 or forwarding of input files, via a data network interface 51, to an external recipient.

Upon receipt of a detection signal indicating on the input of data files, the file input detection unit 43 triggers the transmission control unit 47 to provide for an automatic forwarding of the input files to the external recipient, e. g. a file data base of a storage service provider. The transmission control unit 47 comprises an image resolution control unit 47a for adapting an image resolution of a received image file to a desired value which is suitable for permanently storing the files in the external memory and which is set by means of a resolution set key 53.

On the other hand, and independent from the resolution control carried out in the transmission control unit 47, the resolution of an image file to be internally stored in the memory 49 is adapted to the usage ratio of this memory. For this purpose, the memory usage or occupancy of the memory 49 is detected by means of a detection unit 55 which provides a control signal to a further resolution control unit 45a, provided within the memory control unit 45. In this way, when the memory 49 is almost empty, a high resolution of internally stored photos may be set, whereas at a high degree of storage occupancy the resolution may be drastically reduced, to ensure that newly input image files can still be stored, at least with a "thumbnail" level of resolution.

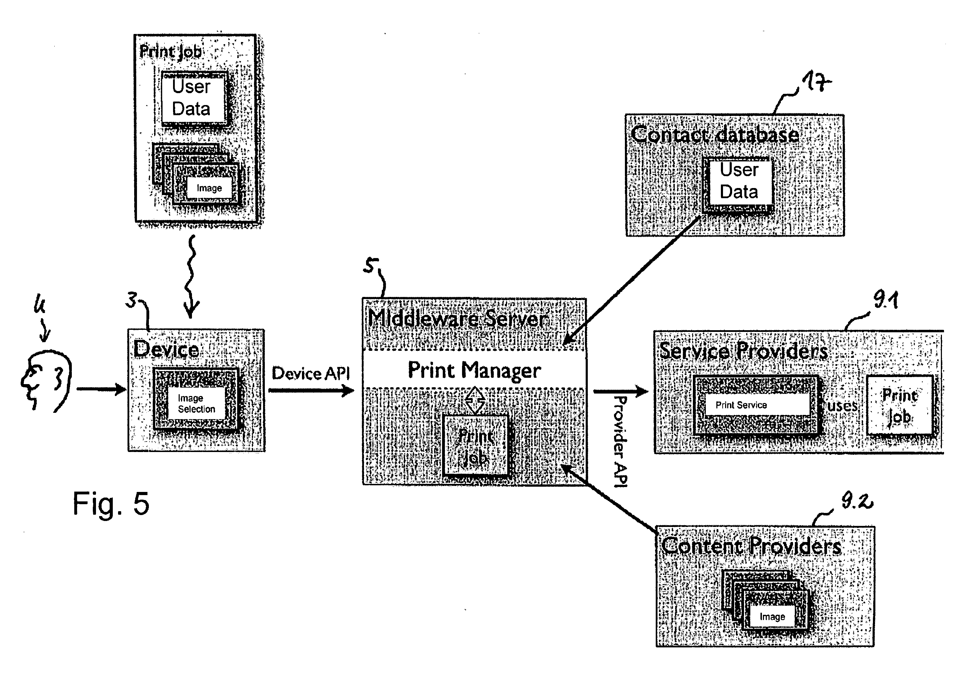

Fig. 5 to 8 serve for illustrating important applications/uses of the system 1 as described above. Due to their descriptive parts, even those figures are self-explaining, so that an additional verbal explanation may be limited to the following remarks:
Fig. 5 illustrates how a user U, via his user terminal 3 and the corresponding device API and the middleware server and a specifically adapted provider API gains access to a print service provider 9.1, wherein a print manager implemented in the middleware server provides the required infrastructure to enable an extremely easy handling of this job at the user's end. The middleware server 5 also provides for the necessary user data request from a contact data base 17 wherein user-specific data are stored, and - as far as necessary - for a contact to further content providers 9.2, e. g. to download image files form respective data bases (memories).

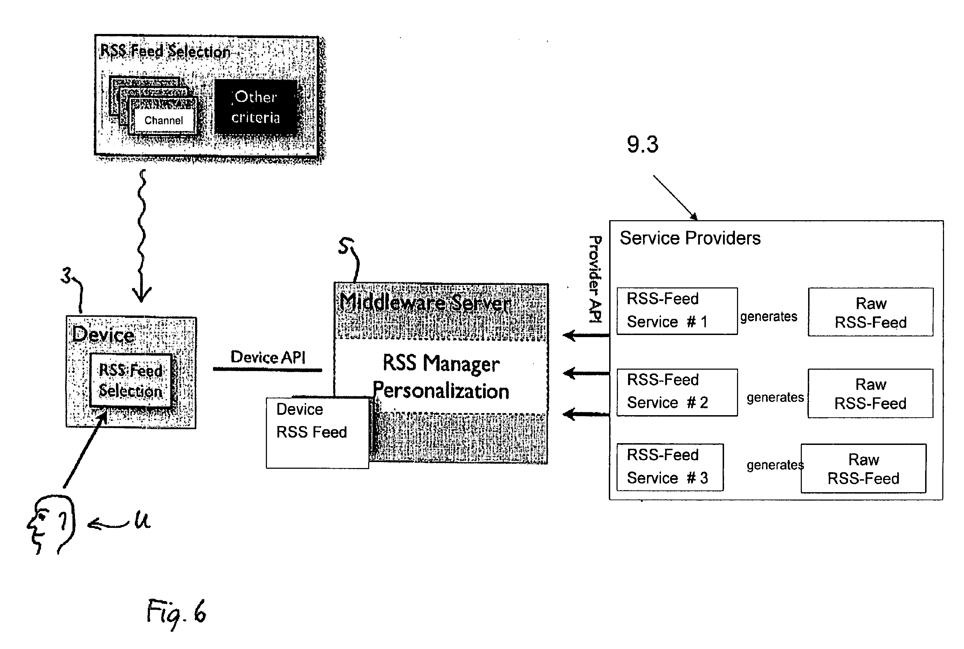

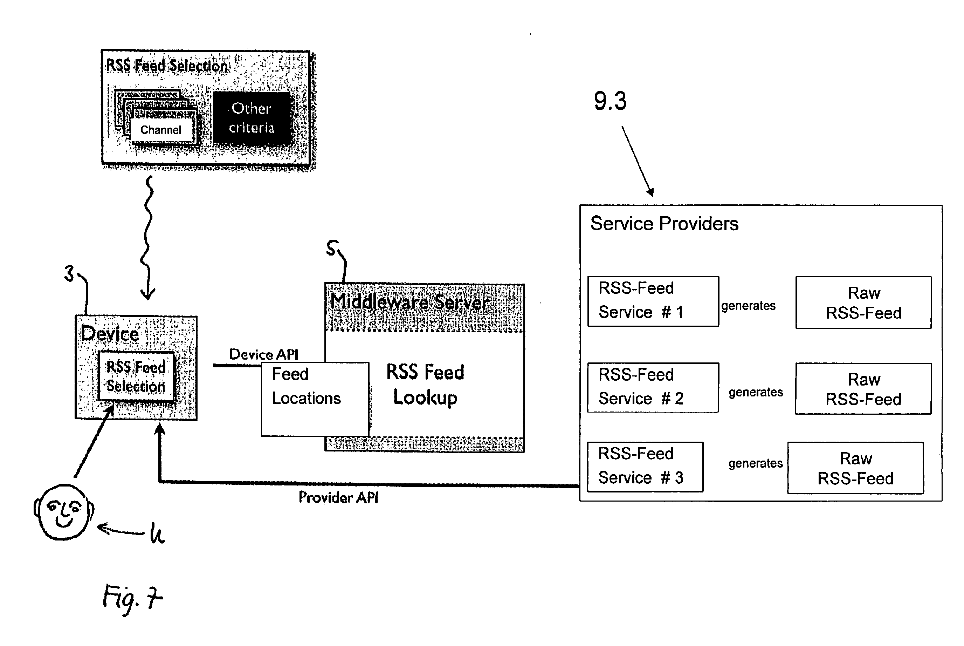

In a comparable manner, as schematically illustrated in Fig. 6, the system provides RSS-feeds from a service provider 9.3 via the middleware server 5 for display at the user terminal 3, in response to a corresponding RSS-feed selection made by the user by means of simple menu-driven inputs at the terminal. Fig. 7 illustrates a modification of this procedure, wherein the middleware server 5 may be "by-passed", using a specifically adapted provider API and negotiation-based.

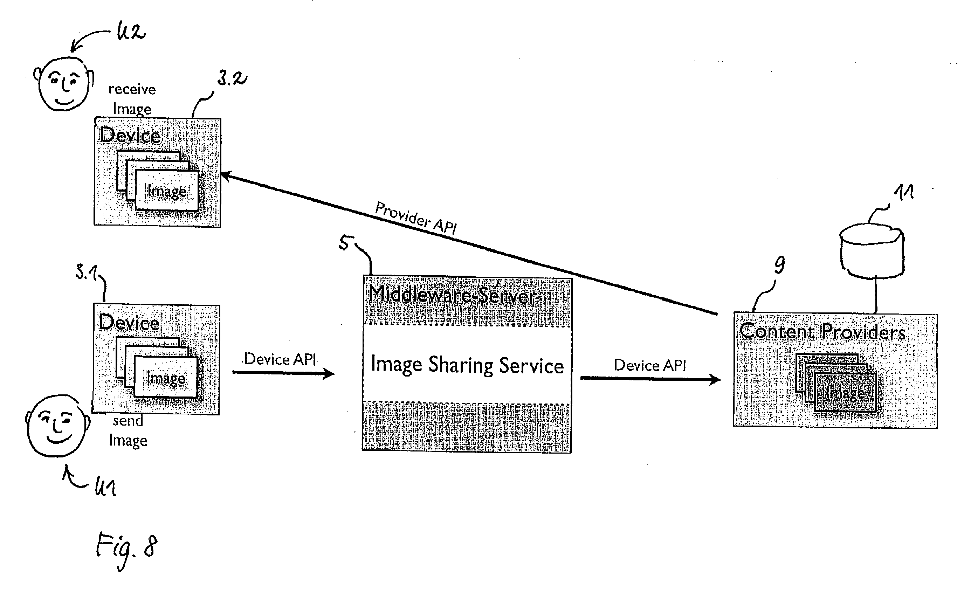

Fig. 8 illustrates an application providing for the transmission of image files from a first user U1, using a first terminal 3.1, to a second user U2, using a second terminal 3.2. As illustrated in this figure, the second user U2 may be connected to the content provider where the image files of user U1 are stored in an image file memory 11 in a direct manner. On the other hand, the user U1 is connected to the content provider 9 via the middleware server 5, making use of the server's support functions implemented in the framework of an image sharing service.

Above is a good example of implementation of this invention, but this invention is not limited to the above implementation example. Other modifications, decorations, substitutions, combinations, and simplifications not against the essential nature and principle of this invention are all equivalent replacement modes within the protection range for this invention.

## Claims

1. System for storing, managing and displaying image, audio or video files, comprising
- at least one content memory, which is shared by a plurality of users and which comprises user-dedicated memory areas for storing their image, audio or video files;
- a plurality of user terminals comprising file input, directory, file display and internal file storing functions, content memory access functions and a data network port; and
- a middleware server connected in a data network between the user terminals and the content memory, for supporting the management of the image, audio or video files and for controlling a bidirectional transmission of the files between the user terminals and the content memory,
wherein the user terminals comprise a proprietary user interface which is basically reduced to the above functions and the middleware server provides standard user interface functions, including access control functions to the content memory.

2. System of claim 1,
wherein the user terminals each comprise a data network interface which provides for a data network connection via the middleware server, as well as in parallel to the middleware server providing for restricted functions.

3. System of claim 1 or 2,
wherein in the middleware server user-dedicated safety functions are implemented, in particular for controlling the access to the content memory and for online banking procedures, which functions make use of user-dedicated data sets regarding biometric features and/or shared secrets of the user, which data sets are stored in a user data memory of the middleware server, or which make use of a public key infrastructure.

4. System of one of the preceding claims,
comprising a dedicated internet website serving as file management interface, wherein the middleware server provides for user interface functions for accessing the website using the user terminals.

5. System of one of the preceding claims,
wherein the middleware server comprises a network address memory having user-dedicated memory areas for storing data and telecommunication network addresses each associated to a short code which is stored in a user terminal of a respective user, the memory areas being adapted to be addressed by receiving a respective short code from the respective user terminal, to send an image, audio or video file from the user terminal to the respective data or telecommunication network address.

6. System of claim 5,
wherein a comment memory is connected to the middleware server, the comment memory serving for storing a respective comment associated to at least part of the data or to the communication network addresses, for sending such comment, connected to an image, audio or video file, to a respective network address when the network address memory is addressed with a respective short code which is associated to the respective data or telecommunication network address.

7. System of claim 5 or 6,
wherein a request memory is connected to the middleware server, the request memory serving for storing a request or forwarding routine associated to at least part of the data or telecommunication network addresses, for searching for data under a respective network address upon receipt of a respective short code from the user terminal and for forwarding a search result to the user terminal.

8. System of claim 6 or 7,
wherein at least one of the comment memory or the request memory comprises user-dedicated memory areas which are associated to the memory areas of the network address memory, the user-dedicated network addresses together with the associated comments and/or requests forming a user-specific network communication profile.

9. System of one of the preceding claims,
wherein for providing a data connection between the user terminals and the middleware server a safe data channel is established, for implementing the safe data channel in particular a public key infrastructure being used.

10. System of one of the preceding claims,
wherein in the middleware server, besides proprietary interfaces and adapters for system-internal connections, standard interfaces and adapters for system-external connections and functions are provided.

11. System of one of the preceding claims, comprising
a device API and a provider API for adapting and transmitting externally provided contents and/or services to the users via the middleware server and the user terminals.

12. User terminal of a system of one of the preceding claims,
being configured as a hand-held or tablet device, comprising a display screen or an external display interface, a control/operating area, at least one of a built-in and exchangeable internal memory for image, audio or video files, a data file interface for receiving image, audio or video files from a source device, and a data network interface, in particular Ethernet, WLAN or mobile network interface, for connecting the terminal to a data network.

13. User terminal of claim 12,
wherein a memory control unit is associated to the built-in or exchangeable internal memory, for controlling the usage thereof in dependence on a memory usage ratio and/or in dependence on control signals being received from the middleware server.

14. User terminal of claim 13,
wherein the memory control unit is adapted for effecting an internal storage of received image or video files with an optical resolution which is adapted to the resolution of the display screen.

15. User terminal of claim 11 or 12,
wherein the memory control unit is adapted for effecting a storage of received image or video files with an optical resolution below the resolution of the display screen, when a detected memory usage ratio exceeds a predetermined threshold value, and
wherein for this purpose usage ratio detection means and image resolution control means being connected into the transmission path from the data interface to the internal memory are provided.

16. User terminal of one of claims 12 to 15,
which does not comprise an alphanumeric keyboard but means for displaying a user menu on the display screen and operating means for inputting menu-driven commands.

17. User terminal of one of claims 12 to 16, comprising
wherein a file input detection unit connected to the data file interface, for detecting an input of image, audio or video files, and a transmission control unit for automatically forwarding received image, audio or video files via the data network port to the content memory in response to the detection of a file input.

18. User terminal of claim 17,
wherein the transmission control unit comprises an image resolution control unit being connected, at its input side, with an operating element of the user terminal, for adjusting the image resolution of an image or video file to be sent to the content memory.

19. User terminal of one of claims 12 to 18,
wherein the data file interface for receiving the image, audio or video files comprises a USB connector or a memory card reader.

20. User terminal of one of claims 12 to 19,
wherein for selected functions of handling the image, audio or video files, in particular for transmitting the same to the content memory, for transmitting the same to predetermined addresses of a data or telecommunication network, for displaying the same on the display screen or for ordering photo prints, dedicated operating means for one-click- or one-touch triggering or triggering those functions on a first or second menu level, without alphanumeric inputs, are provided.

21. User terminal of one of claims 12 to 20,
wherein operating means for selecting network-provided information in connection with a user menu, without alphanumeric inputs, are provided, the operating means more particularly working on one-click or one-touch basis.

22. User terminal of one of claims 12 to 21,
wherein a short code memory for storing a selection of predetermined short codes is associated to the user menu such that in the framework of the user menu the short codes are displayed, in particular to be confirmed on a one-click or one-touch basis.

23. User terminal of one of claims 12 to 22,
comprising a housing of the digital photo frame type, in particular having a foldable and adjustable support element.
